# EUROPEAN PATENT APPLICATION

(11) **EP 1 276 039 A2**
(43) Date of publication of application: **15.01.2003**
(21) Application number: 02015011.6
(22) Date of filing: 04.07.2002
(51) Int. Cl.: G06F 3/023

(54) **Information processing for displaying a cursor**

(30) Priority: 09.07.2001 JP 2001207538; 14.09.2001 JP 2001280801
(71) Applicant: Square Co., Ltd., Tokyo 153-8688 (JP)
(72) Inventor: Maehiro, Kazutoya, Meguro-ku, Tokyo 153-8688 (JP)
(74) Representative: Grünecker, Kinkeldey, Stockmair & Schwanhäusser Anwaltssozietät

(57) **Abstract**

A video game machine monitors whether a cursor is stopped at the same dot position for a certain period of time based on the execution of a window manager. When the cursor stays at the same position, which cell the cursor is in is calculated. The cursor is automatically moved to a distinct place (e.g., the center) indicating the target cell. After moving the cursor, the cursor position stored in driver software is changed to the center of the cell.

## Description

### CROSS REFERENCE TO RELATED APPLICATIONS

The present disclosure relates to subject matter contained in Japanese Patent Application No. 2001-207538, filed on July 9, 2001 and Japanese Patent Application No. 2001-280801, filed on September 14, 2001, the disclosures of which are expressly incorporated herein by reference in their entireties.

### BACKGROUND OF THE INVENTION

### 1. Field of the Invention

The present invention relates to information processing. More specifically, the present invention relates to display of a cursor.

### 2. Description of the Related Art

A cursor is used to input a character and/or a control instruction to a specific position on a display in an information processing apparatus such as a game machine, a computer, and a word processor. The cursor generally indicates a position, at which a character and the like can be input, that is, an instructing point, on the display. The cursor is moved in accordance with an instruction from a controller connected to the game machine and/or a user input device such as a keyboard or a mouse connected to the computer.

With the recent development of the information processing apparatus, the cursor can be moved between desired positions dot by dot freely on the display. However, as the flexibility in movement of the cursor becomes higher, it is more difficult to move the cursor to a predetermined position accurately. In other words, in order to move the cursor to a desired position, the user has to operate the user-input device precisely, which makes the operation more difficult.

For example, there is a technology relating to a "software keyboard" in which a keyboard is displayed on the display and a cursor is used to press a desired key. According to this technology, adjacent software keys are very close. Thus, it is highly possible that the key adjacent to the desired key is pressed by mistake.

### SUMMARY OF THE INVENTION

The present invention is made in view of this problem. Accordingly, it is an object of the present invention to allow a cursor to be manipulated easily and properly. It is another object of the present invention to allow an input operation by using a cursor to be performed easily and properly.

In order to achieve these objects, according to one aspect of the present invention, an information processing apparatus is provided. The apparatus displays a cursor on a display screen and moves the cursor on the display screen based on a signal, which indicates an amount that the cursor moves, from a user input device. The information processing apparatus includes a detecting system that detects whether a position of the cursor on the display screen belongs to a predetermined area on the display screen for a certain period of time. The information processing apparatus further includes a display control system that displays the cursor at a predetermined position on the display screen when the detecting system detects that the position of the cursor belongs to the predetermined area on the display screen for the certain period of time. A selection receiving system may be provided for receiving a selecting instruction for selecting the predetermined area from the user input device.

The information processing apparatus further includes a processing executing system that executes a predetermined processing corresponding to the predetermined area based on the received selecting instruction. In addition, a magnifying and displaying system may be provided for displaying content described in the predetermined area in a magnified manner when the selecting instruction is received.

According to another aspect of the present invention, there is provided an input and output processing method executed by the information processing apparatus. The information processing apparatus displays a cursor on a display screen and moves the cursor on the display screen based on a signal, which indicates an amount that the cursor moves, from a user input device. The method includes detecting whether a position of the cursor on the display screen belongs to a predetermined area on the display screen for a certain period of time or more. The method also includes displaying the cursor at a predetermined position on the display screen when position of the cursor is detected to be in the predetermined area on the display screen for the certain period of time. Furthermore, the method includes receiving a selecting instruction, for selecting the predetermined area, from the user input device.

The method further includes executing predetermined processing corresponding to the predetermined area based on the received selecting instruction. In addition, the method includes displaying content described in the predetermined area in a magnified manner when the selecting instruction is received. The predetermined area may be an area where the cursor is positioned for inputting a predetermined character and where the predetermined character is displayed. When executing the processing, an input of the character is received based on the received selecting instruction.

According to another aspect of the present invention, there is provided an input/output processing method executed by an information processing apparatus. The information processing apparatus displays a cursor on a display screen and moves the cursor on the display screen based on a signal, which indicates an amount that the cursor moves, from a user input device. The method includes detecting whether a position of the cursor on the display screen belongs to a predetermined area on the display screen for a certain period of time or longer. The method also includes displaying the cursor at a predetermined position on the display screen when the position of the cursor is detected to be in the predetermined area on the display screen for the certain period of time.

The method further includes receiving a selecting instruction to select the predetermined area from the user input device, and executing predetermined processing corresponding to the predetermined area based on the received selecting instruction. The method further includes displaying content described in the area in a magnified manner when the selecting instruction is received. The predetermined area is an area where the cursor is positioned for inputting a predetermined character and where the predetermined character is displayed. An input of the character is received based on the received selecting instruction when executing the predetermined processing.

According to another aspect of the present invention, there is provided a recording medium on which is recorded a program. The program causes a computer to execute processing for displaying a cursor on a display screen and moving the cursor on the display screen based on a signal, which indicates an amount that the cursor moves, from a user input device. The program includes detecting whether a position of the cursor on the display screen belongs to a predetermined area on the display screen for a certain period of time. The program also includes displaying the cursor at a predetermined position on the display screen when the position of the cursor is detected to be in the predetermined area on the display screen for a certain period of time.

The program further includes receiving a selecting instruction for the predetermined area from the user input device, and executing predetermined processing corresponding to the predetermined area based on the received selecting instruction. The program further includes displaying content described in the predetermined area in a magnified manner when the selecting instruction is received. The predetermined area is an area where the cursor is positioned when the predetermined processing is executed.

According to another aspect of the present invention, there is provided a recording medium on which is recorded a program. The program causes a computer to execute processing for displaying a cursor on a display screen and for moving the cursor on the display screen based on a signal, which indicates an amount that the cursor moves, from a user input device. The program includes detecting whether a position of the cursor on the display screen is in a predetermined area on the display screen for a certain period of time or longer. The program further includes displaying the cursor at a predetermined position on the display screen when the position of the cursor is detected to be in the predetermined area on the display screen for the certain period of time.

The program further includes receiving a selecting instruction, for selecting the predetermined area, from the user input device, and executing predetermined processing corresponding to the predetermined area based on the received selecting instruction. The program further includes displaying content described in the predetermined area in a magnified manner when the selecting instruction is received. The predetermined area is an area where the cursor is positioned for inputting a predetermined character and where the predetermined character is displayed. An input of the character is received based on the received selecting instruction when the processing is executed.

### BRIEF DESCRIPTION OF THE DRAWINGS

Fig. 1 is a block diagram showing an example of a system configuration, to which the present invention is applied;
Fig. 2 is a diagram showing the configuration of software modules according to one embodiment of the present invention;
Fig. 3 is a conceptual diagram showing a cursor control function according to one embodiment of the present invention;
Fig. 4 is a flowchart for controlling cursor movement;
Fig. 5 is a diagram showing an example of the cursor movement;
Fig. 6 is a diagram showing an example of a screen according to an embodiment of the present invention;
Fig. 7 is a diagram showing an example of a screen before a control operation of the cursor movement is performed; and
Fig. 8 is a diagram showing an example of a screen after the control operation of the cursor movement is performed according to an embodiment of the present invention.

### DESCRIPTION OF THE PREFERRED EMBODIMENT

An embodiment of the present invention will be described below with reference to drawings.

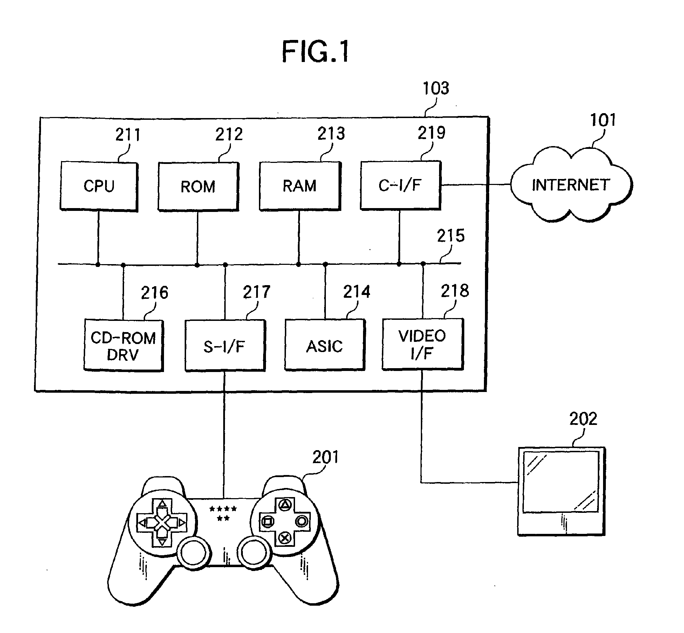

Fig. 1 is a block diagram showing an example of a hardware configuration of an information processing apparatus to which the present invention is applied. It is assumed that a video game machine is used as the information processing apparatus in this embodiment.

A video game machine 103 comprises a CPU 211, a ROM 212, a RAM 213 and an application-specific integrated circuit (ASIC) 214. They are connected via a bus 215. The CPU 211 performs overall control. Basic programs such as BIOS are stored in the ROM 212. Game programs and/or programs for executing processing according to an embodiment of the present invention are stored in the RAM 213, which is used as a temporary memory region. The ASIC 214 performs image processing.

Furthermore, a CD-ROM drive 216, a serial interface 217, a video interface 218 and a communications interface 219 are connected to the bus 215. The CD-ROM drive 216 reads a program from a CD-ROM. In the CD-ROM, game programs and/or programs for executing processing according to an embodiment of the present invention are stored. The serial interface 217 is connected to a game controller 201. The video interface 218 is connected to a television monitor 202. The communications interface 219 is used for connecting to the Internet 101.

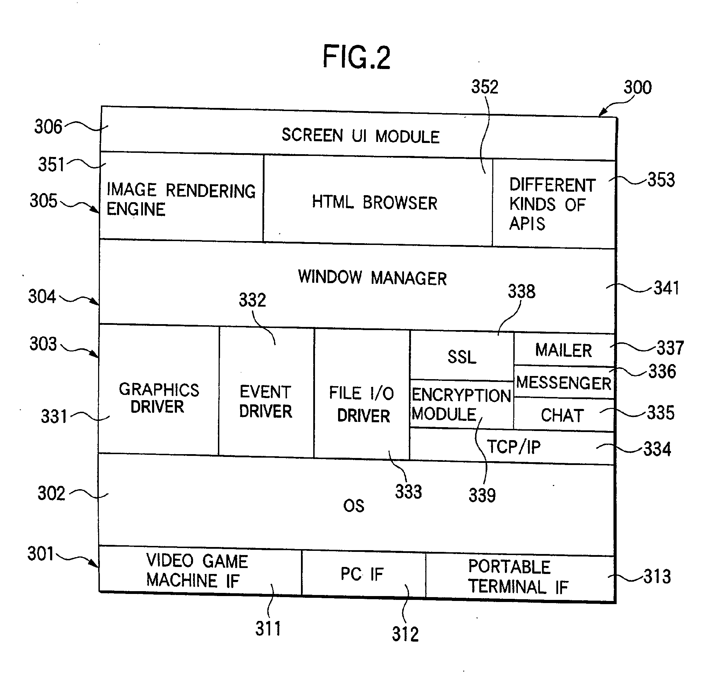

Fig. 2 is a diagram showing the configuration of software modules including programs for implementing cursor control according to one embodiment of the present invention. For example, in the video game machine 103, the CPU 211 reads out a software module 300 from a CD-ROM through the CD-ROM drive 216. Then, the CPU 211 stores the read-out software module 300 in the RAM 213 and executes the software module 300. The software module 300 includes a hierarchy of six layers from a first layer 301 to a sixth layer 306.

The first layer 301 is a physical interface and includes a video game machine IF 311, a general-purpose computer IF 312, or a mobile terminal IF 313 in accordance with hardware in which the software module 300 is installed. The second layer 302 is an operating system.

The third layer 303 includes different kinds of drivers and communications protocols. The drivers may be a graphics driver 331, an event driver 332 and a file I/O driver 333. The graphics driver 331 performs character plotting, line plotting, painting, scrolling and font setting. The event driver 332 obtains an event from a keypad, keyboard or a mouse, for example. The file I/O driver 333 controls file media.

The communications protocol includes a TCP/IP 334 a chat protocol 335 serving as an application layer protocol, a messenger protocol 336 and a mailer protocol 337. The TCP/IP 334 includes an Internet layer protocol and a transport layer protocol. Another protocol may be used as the communications protocol. For example, UDP may be used as the transport layer protocol. Furthermore, the communications protocol includes a Secure Socket Layer (SSL) 338 that achieves the security for the TCP/IP communications. The communications protocol also includes an encryption module 339, which is an encryption exchanged between a client and a server in accordance with the SSL algorithm.

The fourth layer 304 includes a window manager 341 which starts different kinds of modules and performs memory resource management.

The fifth layer 305 includes an image drawing engine 351, a web page viewing browser software 352, and different kinds of application programming interfaces (APIs). The image drawing engine 351 is used to draw an image created by Portable Network Graphics (PNG), Graphics Interchange Format (GIF), Joint Photographic Experts Group (JPEG), Moving Picture Experts Group (MPEG), Java (registered trademark) Script, etc. The web page viewing browser software 352 analyzes a Markup language such as HyperText Markup Language (HTML) and displays a screen in accordance with tag instructions. The API 353 is an interface for communicating with server groups.

The sixth layer 306 is a screen user interface (UI) module for setting the display of various screens, dialogs and so on.

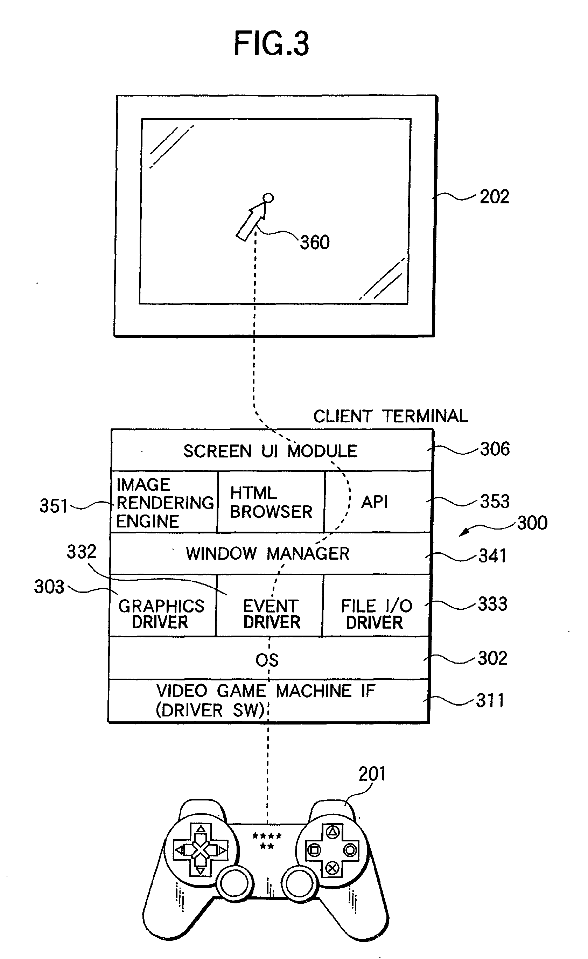

Next, a cursor control function executed by the video game machine 103 will be described with reference to Fig. 3. The video game machine IF 311 detects a cursor position on a screen based on a signal from the controller 201 and stores the position in a predetermined work area. Next, information on the detected position is transmitted to the screen UI module 306 through the operating system (OS) 302, the event driver 332, the window manager 341 and the API 353. The screen UI module 306 moves a cursor 360, which is displayed on a television monitor 202, based on the received position information.

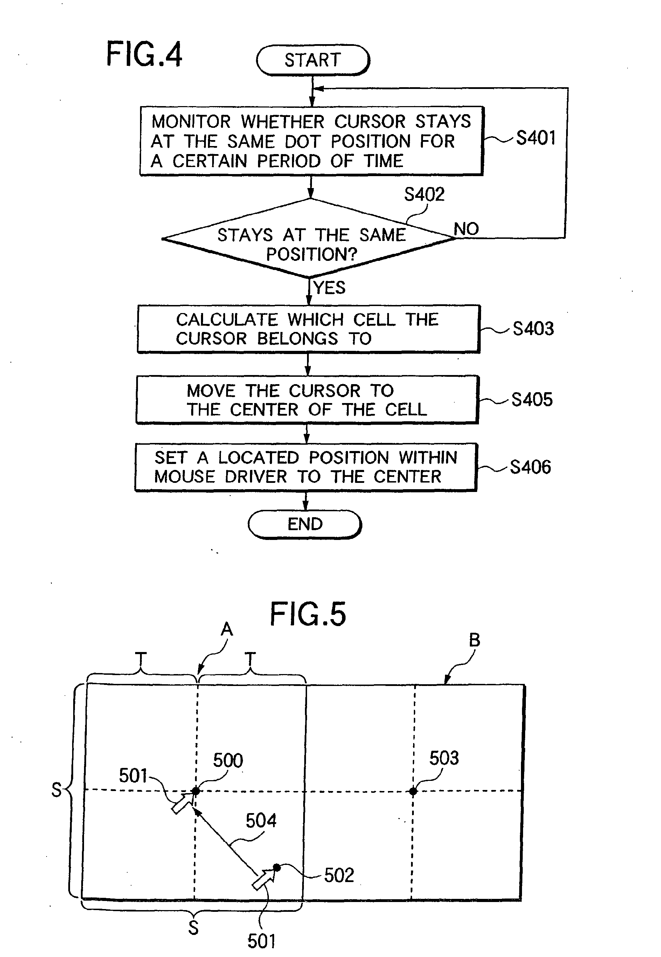

Next, cursor control according to this embodiment will be described with reference to a flowchart in Fig. 4.

The video game machine 103 monitors whether the cursor is positioned at the same dot position for a certain period of time, for example, one second corresponding to a data block having 60 frames, based on execution by the window manager 341 (step S401).

Next, when the cursor stays at the same position (YES route at a step S402), the cell to which the cursor is belonging is calculated (step S403). Here, a term "cell" means a menu area, which is displayed on a screen. The area can be determined by using the game controller 201 and receiving the start of the execution of processing, for example. The cell maybe in various forms including each of keys, buttons, option buttons and check boxes located on the software keyboard.

Next, the stopped cursor is automatically moved to a distinct place (the center) indicating the target cell (step S405). The cursor may be moved from the original place to the target place instantly or at a certain speed. In the latter case, displaying the moving cursor continuously can prevent the user from missing the cursor and/or can prevent the cursor movement from appearing unnatural. The display forms of the cursor during movement and the cursor having been moved may be different from each other.

After moving the cursor, the window manager 341 changes the cursor position stored by the video game machine IF 311 to the center of the cell (step S406). After that, when an instruction for selecting the target cell is received from the user, processing corresponding to the cell is executed. For example, if the cell receives an input of a character, processing using the character is performed.

Fig. 5 shows an example of control over the cursor movement. In the example shown in Fig. 5, areas A and B are defined as menus, which can be selected by using a cursor. The areas A and B are placed adjacently. Each of the areas A and B is a square having vertical and horizontal sides of length S, which is equal to 16 dots. The target positions to which the cursor can go are defined as centers 500 and 503 each at a position located away from the upper left corner of each area 8 dots vertically and 8 dots horizontally. A cursor 501 is in the form of a hollow arrow. When a pointed end 502 of the cursor 501 exists in the area A or in the area B, an instruction corresponding to each area can be input.

When the pointed end 502 of the cursor 501 is located at the lower right within the area A for one second, the video game machine 103 moves the cursor 501 in the direction indicated by the arrow 504. Thus, the pointed end 502 is positioned at the center 500. In this way, according to this embodiment, the cursor is moved to the center of either one of the adjacent areas so that an instruction to the proper area can be performed.

In this embodiment, a case where each of the positions to which the cursor moves is defined as the center of each cell. However, it is needless to say that the position to which the cursor moves may be anywhere within the cell when the position indicates that the cursor points to the target cell.

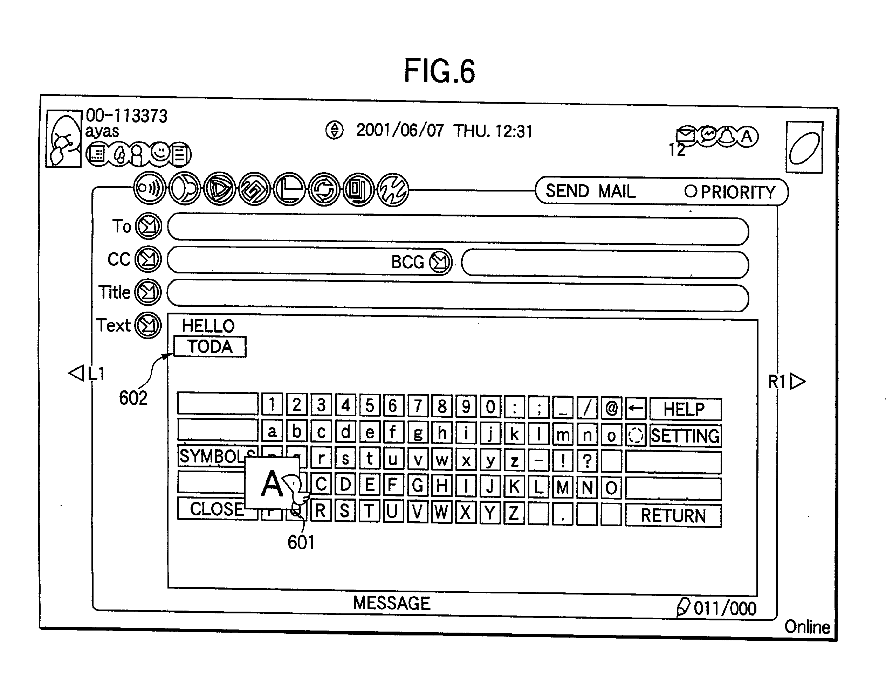

Fig. 6 shows an example of a screen before the control operation of the cursor movement is performed. A software keyboard for inputting characters, a return and so on are displayed on the screen. It appears that there is a space between keys on the display screen. However, areas corresponding to keys, respectively, act as though they are adjacent to each other. The user moves a cursor 601 on a target key by using the game controller 201, then, presses a predetermined button of the game controller 201 to perform processing assigned to each key such as inputting a character or a return in the input area 602. When the button is pressed, a character corresponding to the key is magnified and displayed by the window manager 341.

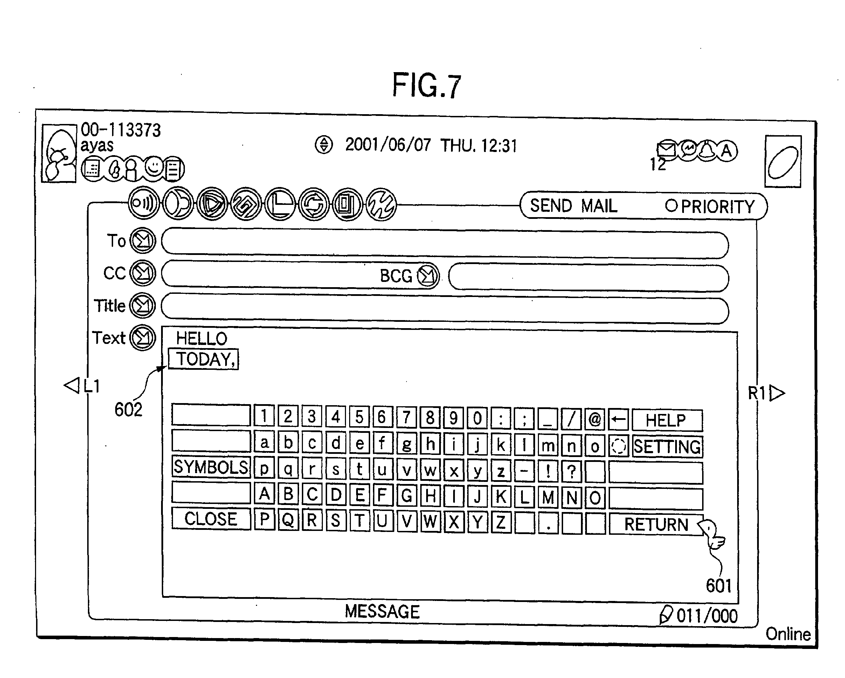

For example, the cursor 601 is moved to a key displaying a character "A" by using the game controller 201 and the button of the game controller 201 is pressed. Then, the character "A" is magnified and is displayed on the key. Then, the character "A" is input in the input area 602. Thus, when the user presses a button, the user can easily and properly realize what corresponds to the key. The example shown in Fig. 7 shows a case where the cursor 601 is moved to the right end of the return key. The cursor 601 looks like a bird facing the left side of Fig. 7. The window manager 341 determines whether or not the pointed end of the bird's beak stops at one dot in a cell.

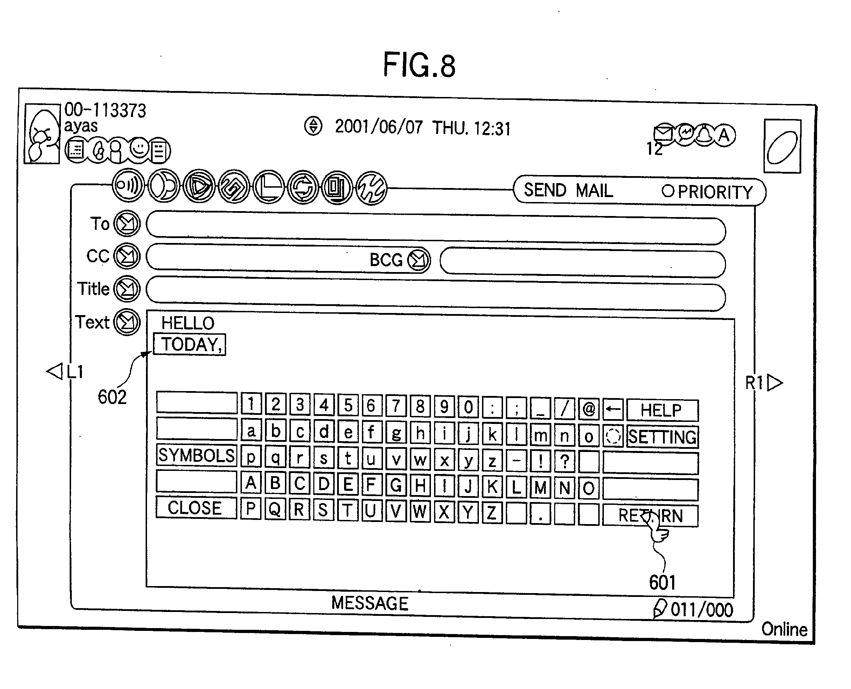

Fig. 8 shows an example of a screen after the control operation over the cursor movement is performed according to an embodiment of the present invention. The pointed end of the beak of the cursor 601 having stopped at a position shown in Fig. 7 is moved to the center of the return key. When the button of the game controller 201 is pressed, characters "RETURN" are magnified and are displayed on the key. And then return processing is performed.

While the preferred embodiment of the present invention has been described above, the present invention is not limited to the embodiment only. Needless to say, other various forms may be implemented. The explained display screen is one illustrative example. The arrangement and the size of the display areas are not limited to those in the example described in the embodiment of the present invention. Also, the cells and/or cursors may be in various forms.

The user-input device may be a game controller, a pointing device such as a mouse, a track ball and a joystick and a keyboard.

In the above-described embodiment, the centering is performed when the cursor is located at the same dot in a predetermined area for a predetermined period of time. However, the present invention is not limited thereto. The centering may be performed when the cursor moves within a predetermined area for a predetermined period of time.

The present invention may be implemented by using one or more computer programs executed by a computer system. The computer system may include processors, which are associated to receive and send data and an instruction from/to a recording medium, an input device and an output device. The computer program may be coded in a high-level procedure type programming language, object-oriented programming language, assembly language, machine language or markup language.

As described above, according to this embodiment, a user of the information processing apparatus can input a character or an instruction easily and accurately by using a cursor.

## Claims

1. An information processing apparatus for displaying a cursor on a display screen and moving the cursor on the display screen based on a signal, which indicates an amount that the cursor should move, received from a user input device, comprising:
a detecting system that detects whether a position of the cursor on the display screen is within a predetermined area on the display screen for a period of time;
a display control system that displays the cursor at a predetermined position on the display screen when the detecting system detects that the position of the cursor is within the predetermined area for the period of time;
a selection receiving system that receives selection of the predetermined area from the user input device;
a processing system that executes a predetermined process corresponding to the predetermined area based on the received selecting instruction; and
a magnifying and displaying system that displays content shown in the predetermined area in a magnified manner when the selecting instruction is received,

2. An information processing apparatus for displaying a cursor on a display screen and move the cursor on the display screen based on a signal, which indicates an amount that the cursor should move, received from a user input device, comprising:
a detecting system that detects whether a position of the cursor on the display screen is within a predetermined area on the display screen for a period of time;
a display control system that displays the cursor at a predetermined position on the display screen when the detecting system detects that the position of the cursor is within the predetermined area on the display screen for the period of time;
a selection receiving system that receives a selecting instruction for the predetermined area from the user input device;
a processing system that executes predetermined processing corresponding to the predetermined area based on the received selecting instruction; and
a magnifying and displaying system that displays content shown in the area in a magnified manner when the selection instructing is received,
wherein the predetermined area is an area where the cursor is positioned when inputting a predetermined character and where the predetermined character is displayed, and
wherein the processing system receives an input of the character based on the received selection instruction.

3. An input/output processing method executed by an information processing apparatus for displaying a cursor on a display screen and moving the cursor on the display screen based on a signal, which indicates an amount that the cursor should move, received from a user input device, comprising:
detecting whether a position of the cursor on the display screen is within a predetermined area on the display screen for a period of time or more;
displaying the cursor at a predetermined position on the display screen when the position of the cursor is detected to be within the predetermined area on the display screen for the period of time;
receiving a selecting instruction for the predetermined area from the user input device;
executing predetermined processing corresponding to the area based on the received selecting instruction; and
displaying content shown in the predetermined area in a magnified manner when the selecting instruction is received,

4. An input/output processing method executed by an information processing apparatus for displaying a cursor on a display screen and moving the cursor on the display screen based on a signal, which indicates an amount that the cursor should move, received from a user input device, comprising:
detecting whether a position of the cursor on the display screen is within a predetermined area on the display screen for a certain period of time;
displaying the cursor at a predetermined position on the display screen when the position of the cursor is detected to be within the predetermined area on the display screen for the period of time;
receiving a selecting instruction for the predetermined area from the user input device;
executing predetermined processing corresponding to the area based on the received selection instruction; and
displaying content shown in the predetermined area in a magnified manner when the selecting instruction is received,
wherein the predetermined area is an area where the cursor is positioned when inputting a predetermined character and where the predetermined character is displayed, and
wherein an input of the character is received based on the received selecting instruction in executing the processing.

5. A recording medium on which is recorded a program for causing a computer to execute processing of displaying a cursor on a display screen and moving the cursor on the display screen based on a signal, which indicates an amount that the cursor should move, received from a user input device, comprising:
detecting whether a position of the cursor on the display screen is within a predetermined area on the display screen for a period of time;
displaying the cursor at a predetermined position on the display screen when the position of the cursor is detected to be within the predetermined area on the display screen for the period of time;
receiving a selecting instruction for the predetermined area from the user input device;
executing processing corresponding to the predetermined area based on the received selecting instruction; and
displaying content shown in the area in a magnified manner when the selecting instruction is received,

6. A recording medium on which is recorded a program for causing a computer to execute processing of displaying a cursor on a display screen and moving the cursor on the display screen based on a signal, which indicates an amount that the cursor should move, received from a user input device, comprising:
detecting whether a position of the cursor on the display screen is within a predetermined area on the display screen for a period of time;
displaying the cursor at a predetermined position on the display screen when the position of the cursor is detected to be within the predetermined area on the display screen for the period of time;
receiving a selecting instruction for the predetermined area from the user input device;
executing processing corresponding to the predetermined area based on the received selection instruction; and
displaying content shown in the predetermined area in a magnified manner when the selecting instruction is received,
wherein the predetermined area is an area where the cursor is positioned when inputting a predetermined character and where the predetermined character is displayed, and
wherein an input of the character is received based on the received selecting instruction in executing the processing.

7. The information processing apparatus according to claim 1,
wherein the predetermined area is each of a plurality of key areas, which are located adjacent to each other in a software keyboard, and
wherein the information processing apparatus is a video game machine.

8. The input/output processing method according to claim 3,
wherein the predetermined area is each of a plurality of key areas, which are located adjacent to each other in a software keyboard, and
wherein the information processing apparatus is a video game machine.

9. The recording medium on which is recorded the program according to claim 5,
wherein the predetermined area is each a plurality of key areas, which are located adjacent to each other in a software keyboard, and
wherein the computer is a video game machine.

10. The information processing apparatus according to claim 2,
wherein the predetermined area is each of a plurality of key areas, which are located adjacent to each other in a software keyboard, and
wherein the information processing apparatus is a video game machine.

11. The input/output processing method according to claim 4,
wherein the predetermined area is each of a plurality of key areas, which are located adjacent to each other in a software keyboard, and
wherein the information processing apparatus is a video game machine.

12. The recording medium on which is recorded the program according to claim 6,
wherein the predetermined area is each a plurality of key areas, which are located adjacent to each other in a software keyboard, and
wherein the computer is a video game machine.
